# EUROPEAN PATENT SPECIFICATION

(11) **EP 1 014 799 B1**
(45) Date of publication and mention of the grant of the patent: **28.04.2004**
(21) Application number: 99934009.4
(22) Date of filing: 14.07.1999
(51) Int. Cl.: A22C 11/02

(54) **METHOD AND MEANS FOR CONTROLLING THE VARIATIONS IN WEIGHT OF EXTRUDED SAUSAGES**
VERFAHREN UND MITTEL ZUR STEUERUNG VON GEWICHTSVERÄNDERUNGEN DER EXTRUDIERTEN WURSTMASSEN
PROCEDE ET MOYEN POUR CONTROLER LES VARIATIONS EN POIDS DE SAUCISSES EXTRUDEES

(30) Priority: 15.07.1998 US 92879 P
(43) Date of publication of application: 05.07.2000
(73) Proprietor: TOWNSEND ENGINEERING COMPANY, Des Moines, IA 50317 (US)
(72) Inventor: KOBUSSEN, Jaap, Des Moines, IA 50317 (US); KOBUSSEN, Jos, Des Moines, IA 50317 (US); KOBUSSEN, Mart, Des Moines, IA 50317 (US); DAVISON, David, L., Des Moines, IA 50317 (US)
(74) Representative: Gilmour, David Cedric Franklyn
(86) International application number: PCT/US1999/015914
(87) International publication number: WO 2000/003603

(56) References cited:
- WO-A-96/05733
- WO-A-98/17119
- WO-A-99/13730
- US-A- 4 434 529
- US-A- 5 743 792

## Description

### BACKGROUND OF THE INVENTION

In recent times, it has become known to co-extrude a strand of sausage material which has an inner core of meat emulsion having an outer surface material that can be coagulated to provide an encasement for the strand (as shown in US Patent No. 3,622,353 to Bradley et al). The coagulation normally includes subjecting the extruded strand to a brine solution. The brine is applied immediately after the strand is extruded.

The brine is sometimes sprayed onto the sausage strand as the strand is moved along an elongated conveyor which is comprised of a plurality of pivotally interconnected links.

Weight control in these processes is largely dependent upon the accuracy of the meat supply. Such co-extrusion systems are therefore often equipped with metering pumps to ensure such accuracy. However, intermittent checks of sausage weights are still often required. Such checks are simply done by weighing one or more sausages as they come crimp/cut or linked from the linking device. When the weight is off target, the operator may adjust the meat-flow accordingly. This is more often the case with instable meat-doughs; those are meat formulations which in time differ in consistency. For instance English breakfast sausage meat formulations contain rusk. Rusk is an important ingredient comparable to breadcrumbs. When freshly mixed an English breakfast sausage meat-dough is fairly fluid. Gradually rusk starts to bind the free water in the dough causing the viscosity to rise. Most meat supply systems in use today are vulnerable for such viscosity changes, in the sense that they give various meat outputs. It is therefore common practice to check and balance the weight consistency of such sausage processes. This is true for common sausage casing stuffing, as well as for co-extrusion processes.

Recently developments in sausage co-extrusion technology have led to co-extrusion processes where the brine treatment is prolonged in time. Older processes (such as described in US Patent No. 3,622,353) have brine dwell times of between 1 and 5 seconds. Newer processes (such as described in International Patent Application No. WO94/11474 to Kobussen et al) have brine times of 30 to 90 seconds or more, depending on sausage end-product requirements. Several advantages over the older methods are obtained by prolonged brine times, however the practice of check and balance of the weight consistency is more difficult. The weight of individual sausages in these processes can only be determined after the coextruded sausage strand is crimped/cut or linked in the linking device. When brine times-are for instance 60 seconds, at a common coextrusion speed of 100 cm per second, there are 60 meters of sausage already coextruded. If the check after the linking device dictates a change in meat flow, 60 meters of sausage is already off weight. Compared to the older methods, these new methods have therefor a worse weight control.

It is therefore a principal object of the present invention to provide a method for manufacturing co-extruded food strands with an edible casing in which the previous problems and disadvantages of the known co-extrusion methods do not occur.

It is a further object of the present invention to provide a novel method for reducing the weight variation of co-extruded sausages.

An additional object of the present invention is to create by co-extrusion a substantially uniform layer of a collagen containing gel around an elongated strand of foodstuff, coagulating said foodstuff by contacting it with a salt containing brine, and determining the weight variation accuracy after said co-extrusion but before linking of the coextruded sausage strand.

These and other objects will become clear from the following description of the present invention.

### SUMMARY OF THE INVENTION

The sausage strand is extruded onto a belt or conveyor and carried through a brine shower system for about 40 seconds. The brine is sprayed through nozzles onto the sausage while traveling on the belt. The conveyor is comprised of a plurality of links which have a flat supporting surface interrupted by a plurality of spaced protrusions with channels therebetween to permit brine to fill the channels and to engage the bottom surface of the sausage strand supported on the protrusions.

The belt is a Multi-Flex chain made from Acetal plastic. The links are secured with stainless steel pins. Twenty four meters of belt running on four tiers provide the brine shower dwell time that is required. The improvement of this invention is the method of producing a co-extruded sausage strand, characterized by determining the weight consistency of said strand before linking said strand of coextruded sausage.

### BRIEF DESCRIPTION OF THE DRAWINGS

Fig. 1 is a plan view of the sausage extruder unit and the associated conveyor;
Fig. 2 is a side elevational view thereof as viewed from the bottom of Fig. 1;
Fig. 3 is a schematic view of the conveyor unit;
Fig. 4 is an enlarged scale perspective view of the conveyor belt;
Fig. 5 is an enlarged scale sectional view taken on line 5-5 of Fig. 1;

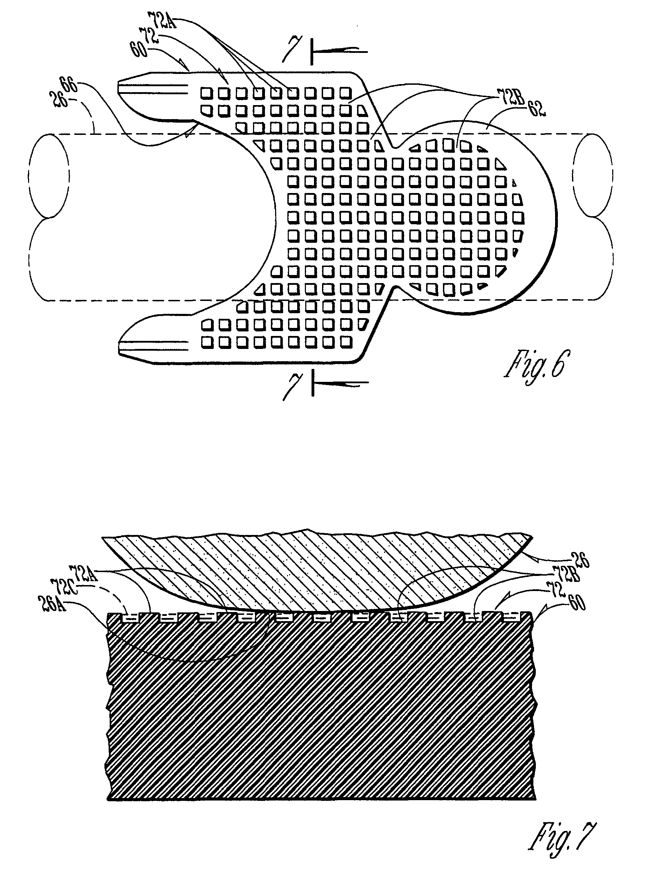

Fig. 6 is an enlarged scale plan view of a conveyor link;
Fig. 7 is a sectional view on line 7-7 of Fig. 6;
Fig. 8 is an enlarged scale partial plan view taken on line 8-8 of Fig. 9;
Fig. 9 is a partial enlarged scale side elevational view taken on line 9-9 of Fig. 8;
Fig. 10 is an enlarged scale sectional view taken on line 10-10 of Fig. 1; and
Fig. 11 is a schematic view of the sensor system.

### DESCRIPTION OF THE PREFERRED EMBODIMENT

The term "sausage" as used herein refers to any type of emulsified meat product that is formed into sausage or frankfurter links or the like. A description of the machine upon which this invention is practiced will first be provided. Most of the machine does not of itself comprise the invention herein.

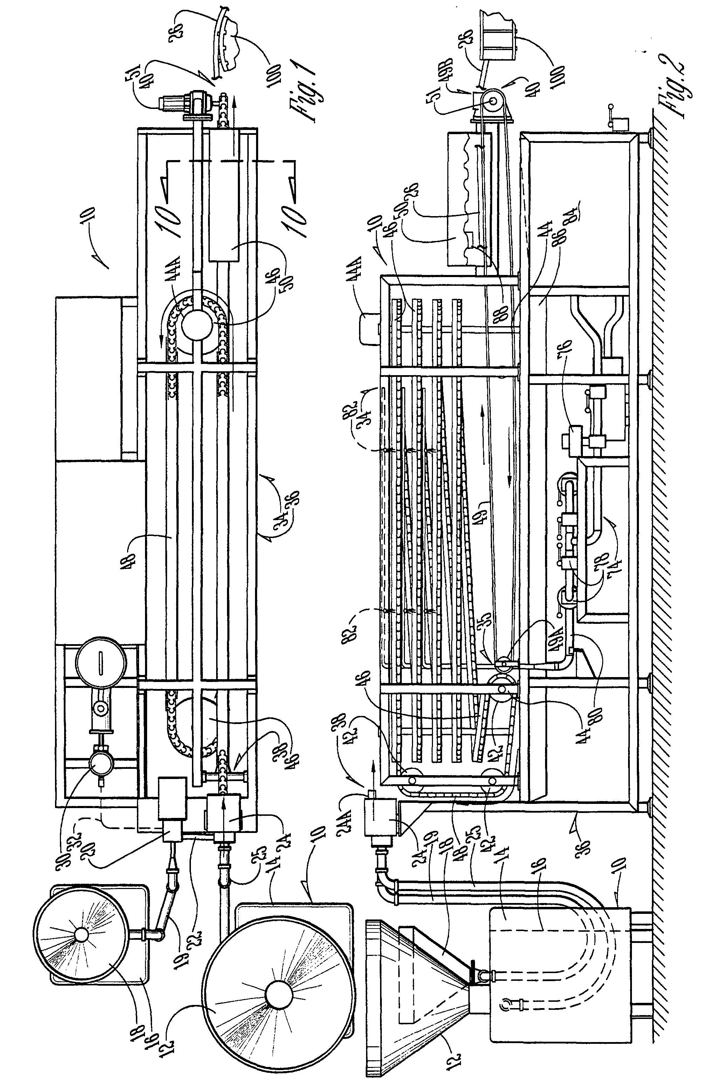

The numeral 10 designates an existing coextruding machine suitable for the conveyor of this invention. The numeral 12 is a meat emulsion hopper using a meat pump machine 14 for pumping emulsified meat. A collagen gel pump 16 has a hopper 18 for receiving the collagen gel. It is connected by conduit 19 to inline mixer 20. A tube 22 connects the inline mixer 20 to the coextruder 24 which is capable of extruding a cylindrical strand of meat emulsion with a collagen gel material on the outer surface thereof. Coextruder 24 with detachable nozzle 24A is connected by tube 25 to the meat pump 14. The conventional coextruded strand of sausage 26 (Figs. 5, 8, and 9) has an emulsified meat material core with the collagen gel comprising the outer surface 28 thereof. Liquid smoke from liquid smoke dispenser 30 is used as a coagulation material to coagulate the outer surface 28 of sausage strand 26. The liquid smoke dispenser 30 can be connected in any convenient way such as by line 32 to the inline mixer 20 (Fig. 1).

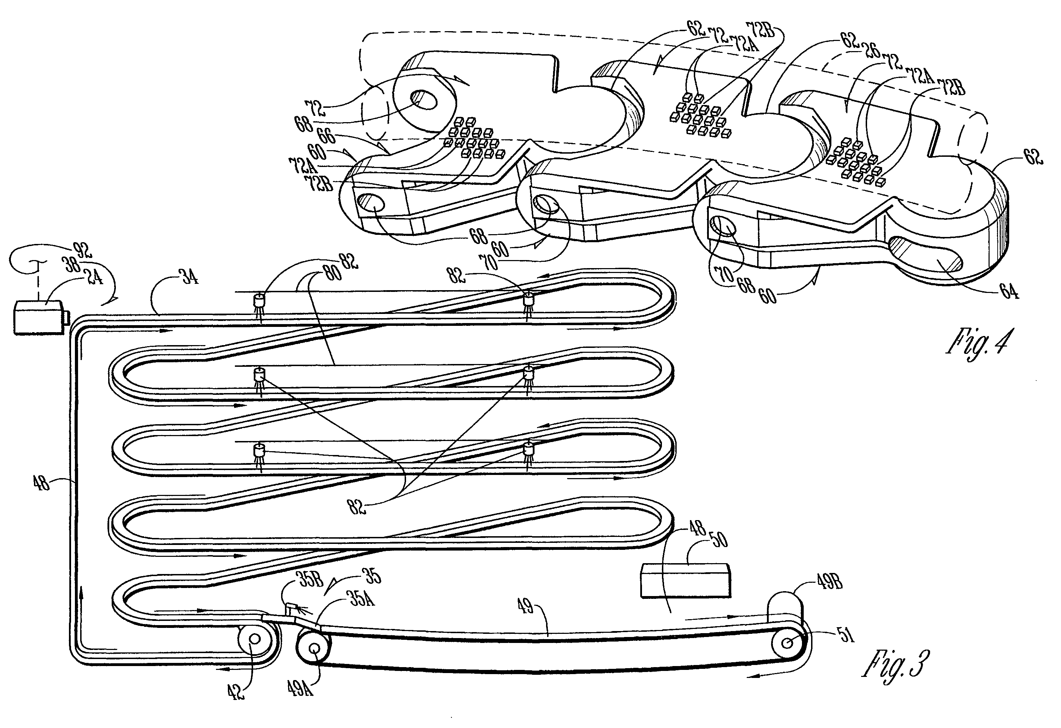

A conveyor system 34 is mounted on frame 36 and has a point of beginning 38 adjacent the output end of coextruder 24, and a discharge station 40 which is located outwardly and downwardly from the point of beginning 38. Three sprockets 42 are rotatably mounted on frame 36 and are adapted to rotate about a horizontal axis. As best shown in Fig. 2, two of the sprockets 42 are vertically disposed with respect to each other below point of beginning 38, and the third sprocket 42 is located on the outer end of a conveyor system 34 adjacent intermediate discharge station 35.

Two vertical shafts 44 are mounted on opposite ends of frame 36. Each shaft 44 has five rotatably disposed sprockets 46 thereon which are adapted to rotate on shafts 44 about the vertical axis of the shafts. Each set of five sprockets 46 are located in the same parallel plane as one each of the sprockets on the opposite vertical shaft 44. One of the shafts 44 can be driven by motor 44A (Figs. 1 and 2). An endless conveyor 48 is circuitiously mounted on the sprockets 42 and 46.

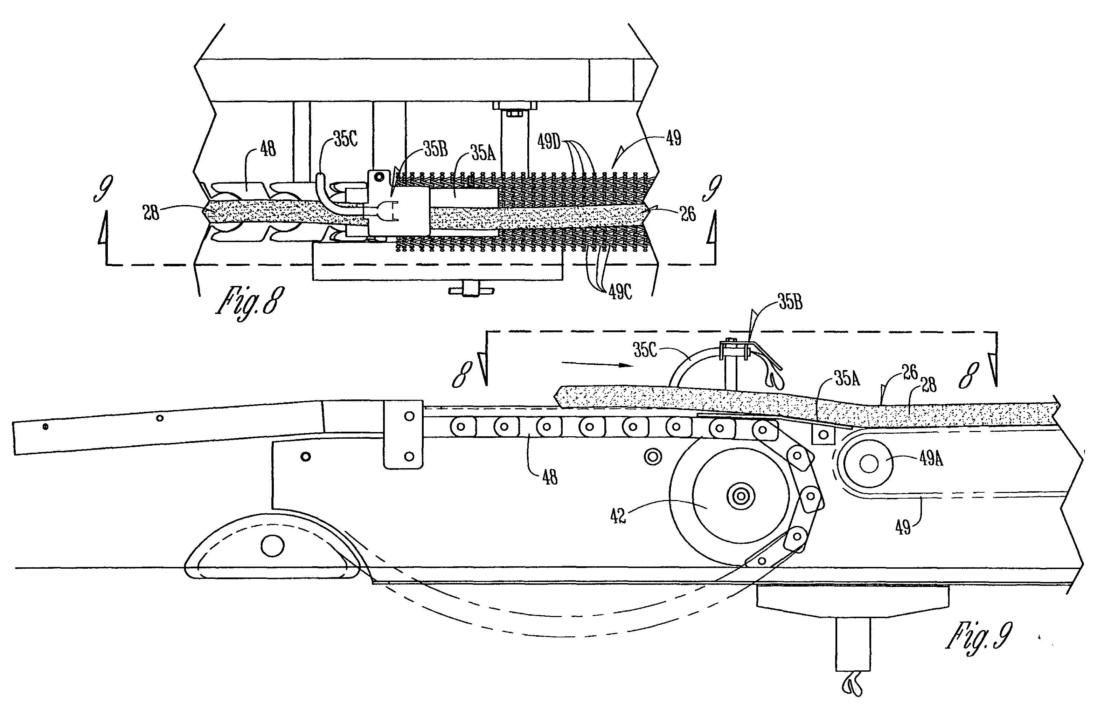

A second conveyor 49 (Figs. 8, 9) is rotatably mounted on sprockets 49A and 49B (Fig. 2). Sprocket 49A is adjacent to and below sprocket 42 in intermediate discharge station 35. Conveyor 49 (Fig. 8) is comprised of a plurality of corrugated parallel wires 49C interconnected by pivot rods 49D. It is seen that conveyor system 34 includes conveyors 48 and 49.

At the intermediate discharge station 35, a ramp plate 35A (Fig. 9) is secured to the machine 10 and extends over the conveyor 48 and sprocket 42, and thence extends slightly downwardly towards the top of conveyor 49. A water nozzle 35B is mounted over ramp plate 35A and is connected to a source of fresh water (not shown) by tube 35C to spray fresh water on strand 26.

An inverted v-shaped frame 50 is mounted on frame 36 adjacent discharge station 40. A drive 51 shaft for the conveyor 49 is located adjacent the discharge station 40 as best shown in Figs. 1 and 2.

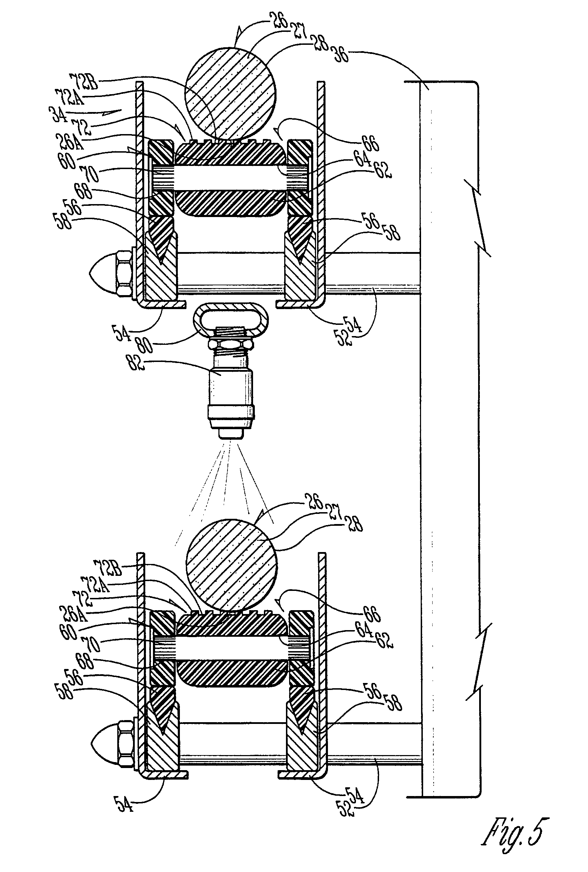

Conveyor 48 (Fig. 5) is disposed between a plurality of elongated L-shaped guides 54 which are secured to frame 36. Elongated rails 56 mounted on bearings 58 extend longitudinally through the guides. With reference to Fig. 4, the conveyor 48 is comprised of a plurality of conveyor segments or links 60 which each have a circular male member 62 at one end thereof with a laterally extending connection slot 64. A semi-circular female slot 66 appears at the end of segment 60 opposite to circular male member 62. Laterally extending apertures 68 extend through the semi-circular female slot 66. Laterally extending pins 70 extend through the aperture 68 and thence through the slot 64 to interconnect the belt segments 60. The apertures 68 permit the segment 60 to pivot about the longitudinal axes of aperture 68, and the slot 64 permits the segments 60 to have limited pivoted movement about a vertical axis passing through the slot 64 so that the conveyor 48 can reverse its direction of travel around sprockets 46. The center portion of each segment 60 is comprised of a flat supporting surface 72 which is in the same plane as the upper surfaces of the circular male member 62 and the body of the segment surrounding the female slots 66. The support surface 72 has a plurality of projections 72A which are preferably aligned in rows to create channels 72B therebetween. The projections 72 are approximately 0.406 cm², and 0.114 cm high (0.063 in. square, and 0.045 inches high), thus making channels 72B 0.160 cm (0.063 in), wide and 0.114 cm (0.045 inches) deep. A strand 26 one inch in diameter usually will have its lower surface 26A touching 4-6 members 72A and will span 4-6 channels 72B. When the channels 72B are filled with brine, the brine 72C in the channels will engage the bottom surface 26A of sausage strand 26.

With reference to Fig. 2, a brine circuit system 74 includes a brine pump 76. A plurality of miscellaneous control valves 78 are imposed in the brine circuit 74 to selectively control the flow of brine through the system. A fluid line 80 extends from pump 76 and includes a plurality of spaced nozzles 82 which, as discussed hereafter, are located in a plurality of locations on frame 36 directly above the conveyor 48 (see Fig. 5) to dispense a spray of fluid brine on the strand of sausage 26.

Brine circuit 74 includes a brine tank 84 which is connected to a brine collection tray 86 located below the various tiers of conveyor 48, and below conveyor 45.

In operation, the meat emulsion hopper 12 is charged with a supply of meat emulsion, and the collagen hopper 18 is charged with a quantity of collagen gel. Similarly, the liquid smoke dispenser 30 is charged with liquid smoke so that the liquid smoke is combined with the collagen gel within inline mixer 20.

The mixture of liquid smoke and collagen gel is transmitted through tube 22 to co-extruder 24 which conventionally discharges the sausage strand 26 with the center core of meat emulsion and an outer surface 28 comprised of the collagen gel and liquid smoke. The liquid smoke is adapted to coagulate the collagen gel in the presence of air and a brine solution. The strand of sausage 26 is discharged from extruder 24 onto the point of beginning of the conveyor 34. The sausage strand progresses along the moving conveyor 48 of the conveyor 34 and is moved under a plurality of the nozzles 82 which spray a quantity of brine on the moving sausage strand. The brine-filled channels 72B help the brine to engage the bottom surface 26A of the strand.

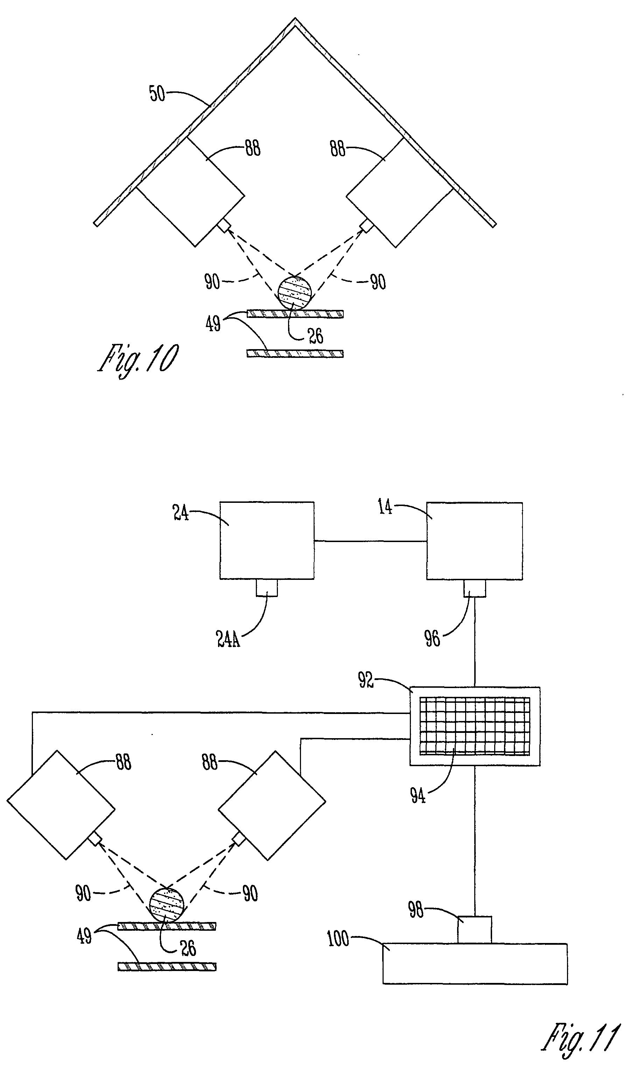

The following structure deals primarily with the instant invention. A pair of laser light emitters 88 (Fig. 10) are secured to frame 50 adjacent conveyor discharge end 40 and emit blade shaped beams 90 downwardly and inwardly towards the strand 26 which has a coagulated outer surface 28. The beams 90 together span at least 120° of the circumference of the strand and communicate electronic signals to controller 92 (Fig. 11) which converts the signals into a cross-sectional diameter of the strand 26. The controller 92 is programmed to know the size (diameter) of the nozzle 24A being used in extruder 24 through manual engagement of a conventional touch screen 94 on the controller. Since the density of the strand is essentially constant, any variations in the diameter of the strand 26 are directly proportional to the weight or density of the strand per unit length. Thus, if the nozzle 24A is 10 mm in diameter, the controller 92 from the signal provided by lasers 88 will advise the controller 92 of any variations in the diameter of the strand 26 at the discharge end 40 of the conveyor 49. If the sensed diameter of the strand 26 has decreased, (such as by stretching of the strand), this decrease will be sensed by the controller 92 as described above. An electronic signal will be sent from the controller 92 to the power input motor 96 of pump 14 to increase the output of meat emulsion to extruder 24. This will cause the diameter, and hence the weight, of the finished strand 26 at bushing end 40 to be increased commensurate with a predetermined diameter of a known weight consistent with the 10 mm nozzle being used in that program. The above procedure is reversed if the sensed diameter of the strand at end 40 is oversize.

The controller 92 may be comprised of one or more computers wherein a first computer performs the mathematics from the signals received from the sensors 88 to calculate the diameter of the sensed strand. The first computer can then transmit the measured diameter data to the second computer for comparison to predetermined diameter data, whereupon the second computer can exercise control over the pump speed, as required, to compensate for diameter variations. If desired, the first computer can respond to average measured diameter readings, rather than individual readings, whereupon the second computer will respond to average measured readings rather than individual readings. The lasers 88, for example, can receive measured diamenter data from a strand of up to 50 scans per second over a 40 second period, if average diameters were to be used.

The controller 92 is also operationally connected to the motor 98 of linker 100 which receives the strand 26 as it leaves conveyor end 40. The controller 92 operates the linker 100 at constant speed for a given nozzle 24A, and automatically increases the rotational speed of linker motor 98 and pump motor whenever the touch screen 94 is notified manually that a nozzle of different diameter is being used with extruder 24.

The controller 92 coordinates the speed of the rate of discharge of the strand of sausage 26 with the longitudinal movement of the conveyors 48 and 49 as dictated by motor 44A and the conveyor drive 51 so that the elongated strand will normally not be stretched during its movement.

The excess brine from nozzles 82 flows downwardly into the brine collection tray 86, and thence into brine tank 84 wherein the excess brine is recirculated through the system.

The controller 92 is also adapted to cause the strand of sausage 26 to move from the point of beginning 38 to the intermediate discharge station 35 in approximately 40 seconds to permit the brine sufficient time to coagulate the outer surface 28 of the sausage strand 26.

When the strand 26 reaches intermediate discharge station 35, it is very moist from the brine solution. It moves over ramp plate 35A (Fig. 9) and underneath fresh water nozzle 35B, and thence onto open wire conveyor 49. The residual brine on the strand is washed away by the fresh water, and all the water thereon flows by gravity from the strand downwardly through the openings between the corrugations in corrugated wire 49C in conveyor 49 for deposit in tray 86.

When the sausage strand 26 reaches the discharge station 40, the outer surface 28 is sufficiently coagulated to provide strength to the sausage strand where it is received by linker 100 where it is formed into a plurality of lengths at that location.

The present invention provides a process for coagulating co-extruded collagen containing gel surrounding an edible food stuffs, i.e. sausages. Co-extrusion methods are mainly being used for co-extrusion of sausage or sausage like materials. While the instant process relates particularly to the manufacturing of sausages, it may also be used in the production of other collagen coated foodstuffs, such as fish or meat products containing vegetable or cheese or both. The term "sausage" as used herein refers to any type of emulsified food product that is formed into sausage or frankfurter links or the like.

The invention is not limited to collagen coated foodstuffs, but may also be applied for co-extruding foodstuffs with a different kind of coating material such as casein, soy, wheat, cellulose, alginate, chitosan or starch based gels.

The present invention holds the concept of determining the weight consistency of the coextruded sausage strand, right after point of extrusion, before the point of linking the sausage strand. In this manner corrections to the meat supply may be taken earlier than after the weighing of individual sausages after the linking step. This concept is particularly useful if the outcome the weight check is automatically translated in meat supply changes, by having the weigh determining device be in direct communication with the meat supply system.

One preferred method of determining the weight accuracy of the coextruded sausage strand is to have weight sensing means installed after the coextuder which can intermittently determine the weight of a set length of sausage. For instance one meter of the continuous sausage strand may be weighed every 2 seconds, right after the coextruder, as it moves along into its path through the brine dwell system. An electronic program can than translate weight variation, into commands towards the meat supply system to secure a weight consistent sausage output.

Such electronic program may be likewise used for a second preferred method, by which the weight consistency determination, is accomplished by determining the sausage strand diameter consistency. In this method an electronic sensing means is employed (an electronic eye or laser beams 90) to measure the diameter of the sausage strand as it exits the coextruder. The sausage strand outer volume or its diameter is in direct correlation with its weight, therefore diameter changes to the coextruded sausage strand can be measured and translated into commands to the meat supply system (e.g., pump 14).

It is therefore seen that the conveyor system of this invention will achieve at least its principal objectives.

## Claims

1. A method of producing a co-extruded sausage, comprising the steps of co-extruding a strand of unlinked sausage by means of a pump (14) including co-extrusion of a casing forming material around a strand of foodstuffs, sensing the weight per unit length of the co-extruded strand by sensing the outside diameter thereof before the strand is linked, comparing the sensed diameter to that of a strand having a predetermined diameter and predetermined weight per unit length, determining any plus or minus variance between the measured diameter and increasing or decreasing, respectively, the rate of discharge of sausage by the pump to adjust the diameter of a subsequently co-extruded strand to that of a strand having the predetermined diameter.

2. The method of claim 1 wherein the sensing step is accomplished by means of at least one sensor laser (88).

3. The method of claim 1 wherein the sensing step is accomplished by means of at least a pair of laser sensors (88).

4. The method of claim 3 wherein the sensors (88) emit a planar beam of light towards the strand.

5. The method of claim 4 wherein the planar beam of light intersects at least 120° of the circumference of the strand.

6. The method of claim 1 wherein the strand is formed into a plurality of elongated links after the sensing has taken place.

7. The method of claim 1 further comprising the steps of coagulating the casing forming material, determining the weight per unit length of the co-extruded strand after the step of coagulating and thence linking the strand into a plurality of links.

8. The method of claim 7 wherein the strand is moved through a coagulation station after extrusion, and then has its diameter sensed.

9. A method according to claim 2 **characterized by** the use of electronic vision technology to determine the diameter of said strand of sausage.

10. A method according to claim 1 **characterized by** said assessment of weight consistency being performed with the use of sensing means to determine the weight of a predefined length of sausage.

11. The method according to any of the previous claims **characterized by** said measuring or sensing means being in communication with pumping equipment of said foodstuff supply, as to automatically vary said equipment setting to obtain low weight variation of said strand of sausage.

12. The method according to claim 1 **characterized by** said co-extruded strand of sausage being set in contact with a salt containing solution for a period longer than 3 seconds prior to said linking.

13. The method according to claim 1 **characterized by** said co-extruded sausage being an English breakfast sausage.

14. The method according to claim 13 wherein said English breakfast sausage contains rusk.

15. An apparatus for producing co-extruded sausage comprising a co-extruder (24) having an infeed and outfeed end, a supply of casing forming material and a supply of foodstuff connected to said infeed end to form a strand (26) of co-extruded sausage from said outfeed end, **characterised by** having means to assess weight consistency of said strand of co-extruded sausage close to said outfeed end before said strand is linked.

16. The apparatus according to claim 15 **characterized by** said means to assess weight consistency including equipment to determine the diameter of said co-extruded sausage strand (26).

17. The apparatus according to claim 15 **characterized by** said means to assess weight consistency including equipment to determine the weight of a predefined length of said co-extruded sausage strand (26).

18. The apparatus according to claim 15 **characterized by** said means to assess weight consistency being in communication with pumping equipment (14) of said supply of foodstuff, as to automatically vary said equipment setting to obtain low weight variations of said co-extruded sausage strand (26).

19. The method of claim 7 wherein the sensing step is accomplished by means of at least a pair of laser sensors (88).

20. The method of claim 19 wherein the sensors (88) emit a planar beam (90) of light towards the strand (26).

21. The method of claim 20 wherein the planar beam (90) of light intersects at least 120° of the circumference of the strand (26).

22. The method of claim 7 wherein the strand (26) is formed into a plurality of elongated links after the sensing has taken place.

23. The apparatus of claim 15 wherein the co-extruder (24) has an inner core and a casing forming material on the outer surface thereof, the apparatus further comprising a meat pump means (14) connected to the co-extruder, a conveyor (34) downstream from the co-extruder to receive the extruded sausage strand (26), and having a discharge end (40), means on the conveyor for providing a coagulation solution to the extruded strand (26), said means to assess weight consistency being adjacent the discharge end (40) of the conveyor (34) for assessing the weight per unit length of the sausage strand (26) before the strand is linked, controller means (92) connected to the means to assess weight for comparing the measured weight of the strand (26) to a predetermined desired weight, the controller (92) being operationally connected to the pump means (14) to adjust a flow of meat from the pump (16) to compensate for any variance between the measured weight of the strand (26) and the predetermined desired weights during the continued operation of the apparatus.

24. The apparatus of claim 23 wherein the co-extruder (24) has a removable discharge nozzle (24A) so as to permit the use of a plurality of nozzles of different diameters.

25. The apparatus of claim 23 wherein a linker means (100) is located downstream of the sensor means to form links in the strand after it has been sensed by the sensor means.

26. The apparatus of claim 23 wherein the sensor means is a pair of oppositely disposed laser sensors (88) that project laser beams (90) onto the strand (26) adjacent the discharge end (40) of the conveyor (34).

27. The apparatus of claim 23 wherein the laser sensors (88) emit planar beams (90) of light towards the strand (26).

28. The apparatus of claim 26 wherein the laser sensors (88) emit planar beams (90) of light towards the strand (26) to determine the diameter thereof.

## Patentansprüche

1. Verfahren zur Herstellung einer koextrudierten Wurst, umfassend die Schritte eines Koextrudierens eines Strangs von nicht abgebundener Wurst mittels einer Pumpe (14) einschließlich der Koextrusion eines eine Hülle bildenden Materials um einen Strang von Nahrungsmittel, eines Erfassens des Gewichts pro Längeneinheit des koextrudierten Strangs durch Erfassen des äußeren Durchmessers davon, ehe der Strang abgebunden wird, eines Vergleichens des gemessenen Durchmessers mit dem eines Strangs, der einen vorgegebenen Durchmesser und vorgegebenes Gewicht pro Längeneinheit hat, sowie eines Bestimmens jeder positiven oder negativen Abweichung zwischen dem gemessenen Durchmesser und eines Erhöhens bzw. Verringems der Auslassmenge von Wurst durch die Pumpe, um den Durchmesser eines nachfolgend koextrudierten Strangs an den eines Strangs anzupassen, der den vorgegebenen Durchmesser hat.

2. Verfahren nach Anspruch 1, wobei der Erfassungsschritt ausgeführt wird mittels wenigstens eines Sensorlasers (88).

3. Verfahren nach Anspruch 1, wobei der Erfassungsschritt ausgeführt wird mittels zumindest eines Paars von Lasersensoren (88).

4. Verfahren nach Anspruch 3, wobei die Sensoren (88) einen planaren Lichtstrahl in Richtung des Strangs emittieren.

5. Verfahren nach Anspruch 4, wobei der planare Lichtstrahl wenigstens 120° des Umfangs des Strangs schneidet.

6. Verfahren nach Anspruch 1, wobei der Strang zu einer Vielzahl länglicher Abbindeglieder geformt wird, nachdem die Erfassung stattgefunden hat.

7. Verfahren nach Anspruch 1, des Weiteren umfassend die Schritte des Koagulierens des eine Hülle bildenden Materials, wobei das Gewicht pro Längeneinheit des koextrudierten Strangs bestimmt wird nach dem Schritt des Koagulierens und damit des Abbindens des Strangs in eine Vielzahl von Gliedem.

8. Verfahren nach Anspruch 7, wobei der Strang nach Extrusion durch eine Koagulationsstation bewegt wird und dann der Durchmesser des Strangs erfasst wird.

9. Verfahren nach Anspruch 2, **gekennzeichnet durch** die Verwendung elektronischer Bildtechnologie, um den Durchmesser des Wurststrangs zu bestimmen.

10. Verfahren nach Anspruch 1, **gekennzeichnet durch** die Bewertung der Gewichtskonsistenz, die ausgeführt wird **durch** die Verwendung von Erfassungsmitteln, um das Gewicht einer vorgegebenen Länge von Wurst zu bestimmen.

11. Verfahren nach einem der vorstehenden Ansprüche, **dadurch gekennzeichnet, dass** die Mess- oder Erfassungsmittel mit der Pumpeinrichtung der Lebensmittelzufuhr in Kommunikation stehen, so dass die Anlageneinstellung automatisch variiert wird, um eine geringe Gewichtsvariation des Wurststrangs zu erhalten.

12. Verfahren nach Anspruch 1, **gekennzeichnet dadurch, dass** der koextrudierte Wurststrang mit einer salzhaltigen Lösung für einen Zeitraum von mehr als drei Sekunden in Kontakt gebracht wird, ehe das Abbinden erfolgt.

13. Verfahren nach Anspruch 1, **dadurch gekennzeichnet, dass** die koextrudierte Wurst ein englisches Frühstückswürstchen ist.

14. Verfahren nach Anspruch 13, wobei das englische Frühstückswürstchen Zwieback enthält.

15. Vorrichtung zur Herstellung koextrudierter Wurst, umfassend einen Koextruder (24) mit einem Zufuhr- und einem Auslassende, eine Zufuhr von Hülle bildendem Material und eine Lebensmittelzufuhr, verbunden mit dem Zuführende, um einen Strang (26) von koextrudierter Wurst am Auslassende zu bilden, **gekennzeichnet dadurch, dass** sie Mittel aufweist, um eine Gewichtskonsistenz des Strangs an koextrudierter Wurst nahe bei dem Auslass-Ende zu bewerten, bevor der Strang abgebunden wird.

16. Vorrichtung nach Anspruch 15, **dadurch gekennzeichnet, dass** die Mittel zur Bewertung der Gewichtskonsistenz eine Einrichtung zum Bestimmen des Durchmessers des koextrudierten Wurststrang (26) umfassen.

17. Vorrichtung nach Anspruch 15, **dadurch gekennzeichnet, dass** die Mittel zur Bestimmung der Gewichtskonsistenz eine Einrichtung zur Bestimmung des Gewichts einer vorgegebenen Länge des koextrudierten Wurststrangs (26) umfassen.

18. Vorrichtung nach Anspruch 15, **gekennzeichnet dadurch, dass** die Mittel zur Bewertung der Gewichtskonsistenz mit einer Pumpeinrichtung (14) der Lebensmittelzufuhr in Kommunikation stehen, so dass die Einstellungen der Einrichtung automatisch variiert werden, um niedrige Gewichtsvariationen des koextrudierten Wurststrangs (26) zu erhalten.

19. Verfahren nach Anspruch 7, wobei der Erfassungsschritt ausgeführt wird mittels zumindest eines Paars von Lasersensoren (88).

20. Verfahren nach Anspruch 19, wobei die Sensoren (88) einen planaren Lichtstrahl (90) in Richtung des Strangs (26) emittieren.

21. Verfahren nach Anspruch 20, wobei der planare Lichtstrahl (90) wenigstens 120° des Umfangs des Strangs (26) schneidet.

22. Verfahren nach Anspruch 7, wobei der Strang (26) zu einer Vielzahl länglicher Glieder geformt wird, nachdem die Erfassung stattgefunden hat.

23. Vorrichtung nach Anspruch 15, wobei der Koextruder (24) einen inneren Kern und an der äußeren Oberfläche hiervon ein Hülle bildendes Material hat, wobei die Vorrichtung des Weiteren aufweist ein Fleischpumpenmittel (14) verbunden mit dem Koextruder, einen dem Koextruder nachgeordneten Förderer (34) zum Aufnehmen des extrudierten Wurststrangs (26) mit einem Austrittsende (40), Mittel auf dem Förderband, um den extrudierten Strang (26) mit einer Koagulationslösung zu versehen, wobei das Mittel zur Bewertung der Gewichtskonsistenz an das Austrittsende (40) des Förderbands (34) angrenzt, um das Gewicht pro Längeneinheit des Wurststrangs (26) zu bewerten, bevor der Strang abgebunden ist, und Kontrollmittel (92) aufweist, die mit den Mitteln zur Bewertung des Gewichts zum Vergleichen des gemessenen Gewichts des Strangs (26) mit einem vorgegebenen gewünschten Gewicht verbunden sind, wobei der Controller (92) mit den Pumpmitteln (14) in Wirkverbindung steht, um einen Fleischmassenfluss von der Pumpe (16) anzupassen, um jegliche Abweichung zwischen dem gemessenen Gewicht des Strangs (26) und dem vorgegebenen gewünschten Gewicht während des ununterbrochenen Betriebs der Vorrichtung zu kompensieren.

24. Vorrichtung nach Anspruch 23, wobei der Koextruder (24) eine entfembare Austrittsdüse (24a) hat, um so die Verwendung einer Vielzahl von Düsen unterschiedlicher Durchmesser zu gestatten.

25. Vorrichtung nach Anspruch 23, wobei ein Abbindemittel (100) nachgeschaltet zu den Sensormitteln angeordnet ist, um Abbindungen in dem Strang zu bilden, nachdem er durch die Sensormittel erfasst worden ist.

26. Vorrichtung nach Anspruch 23, wobei die Sensormittel ein Paar von gegenüber liegend angeordneten Lasersensoren (88) sind, welche Laserstrahlen (90) auf den Strang (26) projizieren, angrenzend an das Austrittsende (40) des Förderers (34).

27. Vorrichtung nach Anspruch 23, wobei die Lasersensoren (88) planare Lichtstrahlen (90) in Richtung des Strangs (26) emittieren.

28. Vorrichtung nach Anspruch 26, wobei die Lasersensoren (88) planare Lichtstrahlen (90) in Richtung des Strangs (26) emittieren, um dessen Durchmesser zu bestimmen.

## Revendications

1. Procédé de production d'une saucisse co-extrudée, comprenant les étapes consistant à co-extruder un toron de saucisse non portionnée au moyen d'une pompe (14) comprenant la co-extrusion d'un matériau formant un boyau autour d'un toron de denrées alimentaires, détecter le poids par unité de longueur du toron co-extrudé en détectant le diamètre extérieur de celui-ci avant que le toron ne soit portionné, comparer le diamètre détecté à celui d'un toron ayant un diamètre prédéterminé et un poids par unité de longueur prédéterminée, déterminer tout écart positif ou négatif entre le diamètre mesuré et augmenter ou diminuer, respectivement, le débit de saucisse fourni par la pompe pour ajuster le diamètre d'un toron co-extrudé ensuite en fonction de celui d'un toron ayant le diamètre prédéterminé.

2. Procédé selon la revendication 1, dans lequel l'étape de détection est accomplie au moyen d'au moins un capteur laser (88).

3. Procédé selon la revendication 1, dans lequel l'étape de détection est accomplie au moyen d'au moins une paire de capteurs laser (88).

4. Procédé selon la revendication 3, dans lequel les capteurs (88) émettent un faisceau plan de lumière en direction du toron.

5. Procédé selon la revendication 4, dans lequel le faisceau plan de lumière croise au moins 120° de la circonférence du toron.

6. Procédé selon la revendication 1, dans lequel le toron est formé en une pluralité de portions allongées une fois que la détection a eu lieu.

7. Procédé selon la revendication 1, comprenant en outre les étapes consistant à coaguler le matériau formant un boyau, déterminer le poids par unité de longueur du toron co-extrudé après l'étape de coagulation et, de là, portionner le toron en une pluralité de portions.

8. Procédé selon la revendication 7, dans lequel le toron est déplacé à travers une station de coagulation après l'extrusion, puis a son diamètre détecté.

9. Procédé selon la revendication 2, **caractérisé par** l'utilisation de la technologie de vision électronique pour déterminer le diamètre dudit toron de saucisse.

10. Procédé selon la revendication 1, **caractérisé en ce que** ladite évaluation de la régularité de poids est réalisée en utilisant un moyen de détection pour déterminer le poids d'une longueur de saucisse prédéfinie.

11. Procédé selon l'une quelconque des revendications précédentes, **caractérisé en ce que** ledit moyen de mesure ou de détection est en communication avec le matériel de pompage de ladite alimentation en denrées alimentaires, de manière à faire varier automatiquement lesdits paramètres du matériel pour obtenir une faible variation en poids dudit toron de saucisse.

12. Procédé selon la revendication 1, **caractérisé en ce que** ledit toron de saucisse co-extrudé est mis en contact avec une solution contenant du sel pour une période supérieure à 3 secondes avant ladite opération de portionnage.

13. Procédé selon la revendication 1, **caractérisé en ce que** ladite saucisse co-extrudée est une saucisse anglaise.

14. Procédé selon la revendication 13, dans lequel ladite saucisse anglaise contient de la biscotte.

15. Appareil pour produire de la saucisse co-extrudée, comprenant une co-extrudeuse (24) ayant une entrée et une sortie, une alimentation en matériau formant un boyau et une alimentation en denrée alimentaire reliée à ladite entrée pour former un toron (26) de saucisse co-extrudée en provenance de ladite sortie, **caractérisé en ce qu'**il a un moyen pour évaluer la régularité de poids dudit toron de saucisse co-extrudée à proximité de ladite sortie avant que ledit toron ne soit portionné.

16. Appareil selon la revendication 15, **caractérisé en ce que** ledit moyen d'évaluation de la régularité du poids comprend un matériel pour déterminer le diamètre dudit toron de saucisse co-extrudée (26).

17. Appareil selon la revendication 15, **caractérisé en ce que** ledit moyen d'évaluation de la régularité du poids comprend un matériel pour déterminer le poids d'une longueur prédéfinie dudit toron de saucisse co-extrudée (26).

18. Appareil selon la revendication 15, **caractérisé en ce que** ledit moyen d'évaluation de la régularité du poids est en communication avec le matériel de pompage (14) de ladite alimentation en denrées alimentaires, de manière à faire varier automatiquement lesdits paramètres du matériel pour obtenir de faibles variations en poids dudit toron de saucisse co-extrudée (26).

19. Procédé selon la revendication 7, dans lequel l'étape de détection est accomplie au moyen d'au moins une paire de capteurs laser (88).

20. Procédé selon la revendication 19, dans lequel les capteurs (88) émettent un faisceau plan (90) de lumière en direction du toron (26).

21. Procédé selon la revendication 20, dans lequel le faisceau plan (90) de lumière croise au moins 120° de la circonférence du toron (26).

22. Procédé selon la revendication 7, dans lequel le toron (26) est formé en une pluralité de portions allongées une fois que la détection a eu lieu.

23. Appareil selon la revendication 15, dans lequel la co-extrudeuse (24) a un poinçon intérieur et un matériau formant un boyau sur la surface extérieure de celui-ci, l'appareil comprenant en outre un moyen de pompage de chair (14) relié à la co-extrudeuse, un transporteur (34) en aval de la co-extrudeuse pour recevoir le toron de saucisse extrudée (26), et ayant une extrémité de décharge (40), un moyen sur le transporteur pour fournir une solution de coagulation au toron extrudé (26), ledit moyen pour évaluer la régularité de poids étant contigu à l'extrémité de décharge (40) du transporteur (34) pour évaluer le poids par unité de longueur du toron de saucisse (26) avant le portionnage du toron, un moyen contrôleur (92) relié au moyen d'évaluation du poids pour comparer le poids mesuré du toron (26) à un poids désiré prédéterminé, le contrôleur (92) étant relié en fonctionnement au moyen de pompage (14) pour ajuster un débit de chair de la pompe (16) pour compenser tout écart entre le poids mesuré du toron (26) et les poids désirés prédéterminés lors du fonctionnement continu de l'appareil.

24. Appareil selon la revendication 23, dans lequel la co-extrudeuse (24) a une buse de décharge amovible (24A) de manière à permettre l'utilisation d'une pluralité de buses de différents diamètres.

25. Appareil selon la revendication 23, dans lequel un moyen portionneur (100) est situé en aval du moyen détecteur pour former des portions dans le toron après sa détection par le moyen de détection.

26. Appareil selon la revendication 23, dans lequel le moyen de détection est une paire de détecteurs laser (88) disposés l'un en face de l'autre, qui projettent des faisceaux laser (90) sur le toron (26) de manière contiguë à l'extrémité de décharge (40) du transporteur (34).

27. Appareil selon la revendication 23, dans lequel les détecteurs laser (88) émettent des faisceaux plans (90) de lumière en direction du toron (26).

28. Appareil selon la revendication 26, dans lequel les détecteurs laser (88) émettent des faisceaux plans (90) de lumière en direction du toron (26) pour déterminer le diamètre de ce dernier.
